# EUROPÄISCHE PATENTSCHRIFT

(11) **EP 3 301 561 B1**
(45) Veröffentlichungstag und Bekanntmachung des Hinweises auf die Patenterteilung: **11.11.2020**
(21) Anmeldenummer: 16191200.1
(22) Anmeldetag: 28.09.2016
(51) Int. Cl.: G06F 3/12, H04L 29/06

(54) **SYSTEM UND MODUL ZUM BETREIBEN VON TEXTILDRUCKMASCHINEN**
SYSTEM AND MODULE FOR OPERATING TEXTILE PRINT MACHINES
SYSTÈME ET MODULE DE FONCTIONNEMENT DE MACHINES D'IMPRESSION SUR TEXTILE

(43) Veröffentlichungstag der Anmeldung: 04.04.2018
(73) Patentinhaber: Schiestl, Angelo, 6336 Langkampfen (AT)
(72) Erfinder: Schiestl, Angelo, 6336 Langkampfen (AT)
(74) Vertreter: Wunderlich & Heim Patentanwälte Partnerschaftsgesellschaft mbB

(56) Entgegenhaltungen:
- EP-A2- 1 197 841
- WO-A1-2013/133789
- US-A- 5 438 922
- US-A1- 2002 140 969
- US-A1- 2011 188 069
- US-A1- 2011 261 390

## Beschreibung

Die Erfindung betrifft ein System zum Betreiben von Textildruckmaschinen gemäß dem Anspruch 1.

Beim Betreiben von Textildruckmaschinen werden für gewöhnlich einzelne Druckaufträge nacheinander durch die Vorrichtung bearbeitet. Hierbei kann das betreibende Unternehmen der Textildruckmaschine von verschiedenen Kunden beauftragt werden. Je nach Auftragslage können Leerlaufzeiten anfallen, in welchen die Textildruckmaschine ungenutzt verbleibt. Dies kann sowohl aus wirtschaftlichen Erwägungen wie auch aus Gesichtspunkten des Textildruckmaschinenbetriebs nachteilig sein. So kann beispielsweise bei einer Druckmaschine, wenn sie längere Zeit ungenutzt verbleibt, Druckerfarbe an Druckköpfen antrocknen, was zu einem verstopfen der Tintendüsen führen kann. Auch kann beispielsweise eine begrenzte Haltbarkeit der Druckerfarbe dazu führen, dass ein Teil der Druckerfarbe ungenutzt verworfen werden muss, sollte die Textildruckmaschine nicht ausreichend ausgelastet sein.

Üblicherweise sind eine erste Textildruckmaschine und mindestens eine zweite Textildruckmaschine angeordnet, welche in einem ersten Unternehmen bzw. einem zweiten Unternehmen vorgesehen sind, welche unabhängig voneinander sind.

Die US 2011/0261390 A1 betrifft ein System, Methode und Computerprogrammprodukt zur Implementierung eines Print Service Netzwerks. Das System umfasst einen Server und eine Datenzentrale, wobei mit dem Server einzelne Controller verbunden sind, welchen einzelne Print-Shops zugeordnet sind.

Die WO 2013/133789 A1 lehrt die automatisierte Zuordnung von Aufträgen zu Service-Dienstleistern. Hierbei ist ein sogenannter Broker ausgebildet, Druckaufträge zu empfangen und einzelnen Service-Dienstleistern zuzuordnen. Die Zuordnung findet insbesondere über die Angabe von Rahmenbedingungen durch den Service-Dienstleister statt.

Die EP 1 197 841 A2 offenbart ein Internet-Printing-Brokering-System und ein Verfahren, bei welchem Benutzer aus einer Vorauswahl von Anbietern einen gewünschten Anbieter für die Durchführung eines Druckauftrags selbstständig auswählen können.

Der Erfindung liegt die **Aufgabe** zu Grunde, ein System zum Betreiben von Textildruckmaschinen anzugeben, welches eine wirtschaftliche Ausnutzung von Druckzeit sowie von Verbrauchsmaterialien der Textildruckmaschinen ermöglicht.

Die Aufgabe wird erfindungsgemäß durch ein System mit den Merkmalen des Anspruchs 1 gelöst. Vorteilhafte Ausführungsformen sind in den abhängigen Ansprüchen angegeben.

Bei dem System ist vorgesehen, dass jede Textildruckmaschine mit einem Datenverarbeitungsmodul versehen ist, welches Daten zum Zustand, Einrichtung und/oder Auslastung der Textildruckmaschine erfasst, dass die Textildruckmaschinen unabhängig von Unternehmen und/oder Standort die erfassten Daten an eine Datenzentrale übermittelt und dass die Datenzentrale ausgebildet ist, von Dritten Druckaufträge entgegenzunehmen und basierend auf den übermittelten Daten mindestens einen zu den Daten passenden Druckauftrag an einen der mindestens zwei Textildruckmaschinen zu übermitteln.

Ein Grundgedanke der Erfindung besteht darin, ein System zur Verfügung zu stellen, welches Informationen über Textildruckmaschinen von einzelnen Unternehmen an eine unabhängige Einrichtung, beispielsweise in Form einer Datenzentrale, übermittelt und basierend auf den übermittelten Daten einen Druckauftrag von der Einrichtung zur Bearbeitung empfängt. Die Textildruckmaschine wird vorzugsweise vom Hersteller mit den entsprechenden Modulen versehen, so dass diese auf Wunsch eines Käufers nur freigeschaltet werden müssen. Die Datenzentrale wird vom Maschinenhersteller betrieben.

Die einzelnen Unternehmen können voneinander unabhängig sein, also jedes seinen eigenen Datenbestand mit eigenen lokalen Druckaufträgen aufweisen, wobei kein Datenaustausch, insbesondere kein direkter Datenaustausch in Form von Druckaufträgen zwischen den Unternehmen vorgesehen ist.

Basierend auf den übermittelten Daten kann die Einrichtung mindestens einem der Textildruckmaschinen einen Druckauftrag zustellen, wobei der Druckauftrag aus einer unternehmensunabhängigen Quelle vorliegen kann, anhand von beispielsweise zur Verfügung stehender "Textildruckmaschinenzeit", also einer Zeit, in welcher zum Zeitpunkt der Auftragsvergabe durch die Einrichtung keine Druckaufträge durch die jeweilige Textilruckmaschine vorliegt. Weitere zusätzliche oder alternative Kriterien zur Vergabe und Übermittlung von Druckaufträgen von der Einrichtung an mindestens einen der Textildruckmaschinen kann die Art und Menge von vorgesehenen Verbrauchsmaterialien und Einrichtungen, wie Textilart, Textilqualität, Druckerfarbe, vorgesehenes Druckverfahren (Inkjet, Siebdruck, etc.), oder Vorbehandlungsmaterialien und Vorbehandlungseinrichtungen der jeweiligen Textdruckmaschinen sein. Es können die Restzeiten der Maschinen genutzt und wirtschaftlich verwendet werden.

Grundsätzlich kann es sich bei dem erfindungsgemäßen System sowohl um eine Anordnung als auch um ein Verfahren handeln. Die Unabhängigkeit der Unternehmen nach dem erfindungsgemäßen System kann insbesondere darin bestehen, dass die mindestens eine Textildruckmaschine des einen Unternehmens zu einem ersten lokalen Netzwerk gehört, wobei zumindest eine weitere Textildruckmaschine eines zumindest einen weiteren Unternehmens in einem weiteren, separaten lokalen Netzwerk vorgesehen ist. Das lokale Netzwerk des einen Unternehmens kann also insbesondere von einem lokalen Netzwerk eines weiteren Unternehmens getrennt sein, wobei die mindestens zwei lokalen Netzwerke der mindestens zwei Unternehmen keinerlei direkte Datenverbindung zueinander bzw. miteinander haben und/oder ein Datenaustausch nicht vorgesehen ist. Die mindestens zwei Unternehmen können insbesondere dadurch ausgebildet sein, dass jedes Unternehmen für sich unabhängig von dem anderen Unternehmen Druckaufträge für seine mindestens eine Textildruckmaschine annimmt, wobei dem zweiten Unternehmen aus Gesichtspunkten der Datenverarbeitung/- übermittlung keinerlei Hinweis über den Druckauftrag des ersten Unternehmens erhalten kann.

Erfindungsgemäß sind die Textildruckmaschinen der jeweiligen Unternehmen ausgebildet, Druckaufträge, welche an das jeweilige Unternehmen direkt von einem Kunden/- Interessenten beauftragt wurde, zu bearbeiten. Nach der Erfindung kann unter den Dritten, welche Druckaufträge an die Datenzentrale übermitteln, somit ein Personenkreis gemeint sein, welcher nicht einen direkten Kunden eines Unternehmens darstellt, der das Unternehmen direkt mit einem Druckauftrag beauftragt. Somit kann es sich erfindungsgemäß bei den Dritten um eine weitere, von den direkten Unternehmensaufträgen unabhängige Quelle von Druckaufträgen handeln.

Das Datenverarbeitungsmodul, auch Modul genannt, ist dazu ausgebildet, alle betriebsrelevanten Daten für den Betrieb einer Textildruckmaschine zu erfassen, welche dazu beitragen können, einen passenden Druckauftrag einer Textildruckmaschine zuzuordnen. Hierzu können zumindest die der Textildruckmaschine zugeordneten Verbrauchsmaterialien, so das zugeordnete Textil oder die zugeordneten Druckerfarben, die bereits der Textildruckmaschine zugeordneten Druckaufträge, welche der Textildruckmaschine direkt durch das jeweilige Unternehmen zugeordnet wurden, wie auch sonstige Parameter, die zum Betrieb einer Textildruckmaschine entscheidend sein können, gehören.

Basierend auf den zur Verfügung gestellten Informationen kann die Datenzentrale sowohl eine Zuordnung eines Druckauftrags von einem Dritten zu einer Druckmaschine durchführen, als auch grundsätzliche die Geeignetheit der Textildruckmaschine beispielsweise hinsichtlich der Verbrauchsmaterialien sowie der zur Verfügung stehenden Druckzeit auf der Textildruckmaschine ermitteln.

Ermittelt die Datenzentrale einen für den Druckauftrag eines Dritten geeignete Textildruckmaschine, kann die Datenzentrale den Druckauftrag der entsprechenden Textildruckmaschine zur Bearbeitung zuordnen, beziehungsweise die für einen Druck erforderlichen Daten an die Textildruckmaschine übermitteln. Hierdurch kann der Druckauftrag von einem Dritten entweder sofort durch die Textildruckmaschine bearbeitet werden oder einer Warteschlange zugeordnet werden, in welcher sich sowohl Druckaufträge des jeweiligen Unternehmens als auch von der Datenzentrale zugeordnete Druckaufträge von Dritten befinden, um nacheinander bearbeitet zu werden.

Sollte zumindest ein Unternehmen für mehr Druckaufträge direkt durch Kunden beauftragt worden sein, als es bearbeiten kann, oder aus sonstigen Gründen nicht in der Lage sein, Druckaufträge zu bearbeiten, kann das Unternehmen diese Druckaufträge nach einer vorteilhaften Weiterbildung des erfindungsgemäßen Systems, beispielsweise über das Modul, an die Datenzentrale übermitteln, welche diesen Auftrag in gleicherweise an Textildruckmaschinen weiterleiten kann, wie einen Druckauftrag von einem Dritten.

Nach einer bevorzugten Weiterbildung des erfindungsgemäßen Systems ist es vorgesehen, dass die Datenzentrale ausgebildet ist, die jeweilige Auslastung der mindestens zwei Textildruckmaschinen mit einer voraussichtlichen Druckdauer von Druckaufträgen aus der Datenzentrale abzugleichen. Vor dem übermitteln eines Druckauftrags eines Dritten durch die Datenzentrale zu einer der Textildruckmaschinen kann es von Vorteil sein, zunächst eine Bestimmung der zur Verfügung stehenden Druckzeit durchzuführen. Die Datenzentrale übermittelt einen Druckauftrag eines Dritten an eine der Textildruckmaschinen, wenn genügend freie Druckzeit auf der jeweiligen Textildruckmaschine zur Verfügung steht. Sollte auf keiner der Textildruckmaschinen genügend freie Druckzeit innerhalb eines vorher definierten Zeitraums vorhanden sein, kann die Druckzentrale den Druckauftrag beispielsweise in Form einer Vorratsdatensammlung einer globalen Warteliste hinzufügen. Der definierte Zeitraum kann beliebig einstellbar sein und beispielsweise eine oder mehrere Stunden, einen oder mehrere Tage, eine oder mehrere Wochen oder Monate betragen.

Insbesondere kann durch den Dritten beim Übermitteln des Druckauftrags an die Datenzentrale eine maximale Wartezeit angegeben werden, wobei das System, insbesondere die Datenzentrale ausgebildet ist, es dem Dritten mittzuteilen, sollte eine Bearbeitung des Druckauftrags in der gewünschten Zeit voraussichtlich nicht möglich sein. Freie Druckzeit kann beispielsweise dadurch entstehen, dass ein Druckauftrag durch das jeweilige Unternehmen storniert, also gelöscht, oder unterbrochen wird.

Besonders zweckmäßig ist es nach der Erfindung, dass zumindest für die erste Textildruckmaschine und die mindestens zweite Textildruckmaschine jeweils ein Steuermittel, insbesondere Server, vorgesehen sind, welches ausgebildet ist, jeweils einer der mindestens zwei Textildruckmaschinen lokale Druckaufträge bereitzustellen. Zum Bereitstellen mehrerer Druckaufträge für die Textildruckmaschinen des jeweiligen Unternehmens kann es vorteilhaft sein, die Druckaufträge über geeignete Mittel, beispielsweise einen Server zum Ausbilden einer Reihenfolge durchzuführender Druckaufträge, zu verwalten bzw. Druckaufträge einzelnen Textildruckmaschinen zuzuordnen. Erfindungsgemäße können die Mittel dazu ausgebildet sein, Druckaufträge, welche einem Unternehmen direkt, also lokal erteilt wurden, zu verwalten. Die Mittel können insbesondere mit dem erfindungsgemäßen Modul in Verbindung stehen. Somit kann die Datenzentrale Zugriff auf die jeweiligen Auftragslisten von zu erledigenden Druckaufträgen des jeweiligen Unternehmens haben. Insbesondere durch den Zugriff auf die Aufträge oder Informationen zu den Aufträgen der jeweiligen Unternehmen kann die Datenzentrale Leerlaufzeiten der jeweiligen Textildruckmaschinen ermitteln.

Besonders bevorzugt ist es nach der vorliegenden Erfindung, dass die mindestens zwei Steuermittel jeweils als Teil eines der separaten digitalen Netzwerke bereitgestellt sind.

Nach einer bevorzugten Ausführungsform der Erfindung ist es vorgesehen, dass zumindest in einem der separaten digitalen Netzwerke mindestens eine zweite Textildruckmaschine vorgesehen ist. Innerhalb des jeweiligen separaten digitalen Netzwerks können also 2, 3, 4, 5 oder mehr Textildruckmaschinen vorgesehen sein. Diese können bedarfsgerecht über dieselben Steuermittel oder mittels separater Steuermittel zum Bearbeiten von Druckaufträgen angesteuert werden.

Nach einer zweckmäßigen Weiterbildung der vorliegenden Erfindung ist es vorgesehen, dass die Datenzentrale eine Eingabemaske aufweist, welche, insbesondere über das Internet, erreichbar ist und ausgebildet ist, Druckaufträge von den Dritten an die Datenzentrale bereitzustellen. Vorzugsweise weist die Datenzentrale Mittel auf, über welche es Dritten ermöglicht ist, Druckaufträge an die Datenzentrale direkt zu übermitteln. Besonders bevorzugt ist es hierbei, dass die Übermittlung der Druckaufträge an die Datenzentrale ortsunabhängig stattfinden kann.

Ortsunabhängig kann insbesondere bedeuten, dass die Datenzentrale den jeweiligen Druckauftrag eines Dritten nicht notwendigerweise über einen festen ortsgebundenen Zugang zur Datenzentrale erhält.

Es ist erfindungsgemäß bevorzugt, dass die Eingabemaske innerhalb eines Internetbrowserfensters darstellbar ist und ein Druckauftrag von einem Dritten für die Datenzentrale von einem beliebigen Computer mit Internetanbindung aus in die Eingabemaske eingebbar ist. Somit kann der Druckauftrag von einem Dritten über einen beliebigen Zugang zum Internet weltweit an die Datenzentrale übermittelt werden. Nach einer Ausführungsvariante der Erfindung ist es vorgesehen, dass die Verbindung eines internetfähigen Computers mit der Datenzentrale mittels einer Software herstellbar ist, welche zuvor auf dem Computer ausgeführt, insbesondere installiert wird. Die Eingabemaske sowie die Software können bevorzugter Weise eine Benutzeroberfläche zum Übermitteln von Druckaufträgen aufweisen. Der Druckauftrag kann eine Datei sein, welche ein Druckbild, insbesondere mit einem Muster und/oder einer Druckerfarbe, aufweist. Die Eingabemaske oder Software kann auch ausgebildet sein, einen Druckauftrag in Form eines Druckdesigns in dem Browserfenster bzw. innerhalb der Software zu entwerfen und den fertigen Entwurf an die Datenzentrale zu übermitteln.

Vorzugsweise kann die Eingabemaske bzw. die Software Mittel aufweisen, welche ein nachträgliches Bearbeiten, Ergänzen und/oder Vervollständigen eines Druckdesigns von dem Dritten bevor der Druckauftrag mit dem Druckdesign bzw., Druckbild an die Druckzentrale übermittelt wird, ermöglicht.

Nach einer besonders vorteilhaften Ausführungsform des erfindungsgemäßen Systems ist es vorgesehen, dass nachträglich bereitgestellte lokale Druckaufträge in den jeweiligen Unternehmen mit einer Priorität gegenüber früheren Druckaufträgen der Datenzentrale durch die Textildruckmaschinen bearbeitbar sind. Für eine verbesserte Ausnutzung von Druckzeit der Textildruckmaschinen kann es vorteilhaft sein, lokale Druckaufträge, welche die jeweiligen Unternehmen direkt von Kunden erhalten, gegenüber Druckaufträgen, welche durch die Datenzentrale übermittelt werden, zu bevorzugen. Wurde also durch die Datenzentrale mindestens ein Druckauftrag, insbesondere zur zukünftigen Bearbeitung durch eine der Textildruckmaschinen an eine Textildruckmaschine, ein Modul oder einen Steuerungsserver übermittelt, kann die durch den Druckauftrag eines Dritten belegte Druckzeit der Textildruckmaschine durch einen lokalen Druckauftrag ersetzt werden. Dies kann vorteilhaft sein, dem jeweiligen Unternehmen weiterhin die Verfügungsgewalt über die realisierten Druckaufträge in Ihrem Unternehmen zu ermöglichen. So können kurzfristige Änderungen im Ablauf der zu bearbeitenden Druckaufträge bedarfsgemäß an die Wünsche des jeweiligen Unternehmens angepasst werden. Die Druckzentrale kann durch die Unternehmen bedarfsgerecht aus dem jeweiligen lokalen Netzwerk ausgeschlossen werden, was eine Vergabe von Druckaufträgen durch die Datenzentrale verhindern kann.

Eine Ausführungsform des erfindungsgemäßen Systems besteht darin, dass die Steuermittel der Textildruckmaschinen ausgebildet sind, einen entgegengenommenen Druckauftrag von der Datenzentrale zu pausieren und/oder zu stornieren, und weiter ausgebildet sind, die Textildruckmaschinen statt dem Druckauftrag der Datenzentrale einen lokalen Druckauftrag zuzuordnen. Weiterhin besteht eine vorteilhafte Ausführungsform der Erfindung darin, dass die Steuermittel des jeweiligen Netzwerks ausgebildet sind, der Textildruckmaschine des jeweiligen Netzwerks einen globalen Druckauftrag der globalen Plattform zuzuordnen, welcher durch die Textildruckmaschine bearbeitbar ist

Es ist erfindungsgemäß, dass das Modul mit jeweils einem der mindestens zwei Textildruckmaschinen in Verbindung steht und ausgebildet ist, Daten zum Zustand, Einrichtung und/oder Auslastung der Textildruckmaschinen an die Datenzentrale zu übermitteln und basierend auf den übermittelten Daten einen Druckauftrag der Datenzentrale entgegenzunehmen, welcher durch die Textildruckmaschinen bearbeitbar ist. Erfindungsgemäß kann das Modul eine Einrichtung sein, welche jeweils einer Textildruckmaschine zugeordnet ist. Das Modul kann insbesondere mit den Steuermitteln, zum Steuern der mindestens einen Textildruckmaschine des Unternehmens, in Verbindung stehen und Informationen hinsichtlich der Auslastung, der Einrichtung sowie dem Zustand der Textildruckmaschine ermitteln. Der Zustand kann insbesondere mit "An", "Aus", "In Wartung", "Betriebsbereit", "in Bearbeitung eines Auftrags" und/oder "Leerlauf" den Zustand der Textildruckmaschine angeben.

Weiterhin kann das Modul dazu ausgebildet sein, zu ermitteln, ob die Textildruckmaschine betriebsbereit ist (Zustand) und/oder welche Verbrauchsmaterialien (Einrichtung) beispielsweise Textil und/oder Druckerfarbe an der Textildruckmaschine, insbesondere zum jeweiligen Zeitpunkt der Ermittlung vorgesehen ist. Das Modul kann insbesondere in Form eines Chips, einer Steckkarte für die Textildruckmaschine oder das Steuermittel, einer Textildruckmaschinenerweiterung beliebigen Aufbaus und/oder einer Software der Textildruckmaschine und/oder der Steuermittel ausgebildet sein. Das Modul kann vorteilhafter Weise mit einer Verbindung in Form eines Fernkommunikationskanals, insbesondere als Datenfernleitung, wie beispielsweis einer Verbindung zum Internet (insbesondere World Wide Web) oder einer VPN (Virtual Private Network) Verbindung zu der Datenzentrale, also einer Online-Verbindung, ausgebildet sein.

Das Modul kann jeweils einer der Textildruckmaschinen eines Unternehmens zugeordnet sein, also ein Modul je Textildruckmaschine. Bedarfsgerecht kann das Modul auch dazu ausgebildet sein, mit allen Textildruckmaschinen eines Unternehmens in Verbindung zu stehen und betriebsrelevante Informationen hinsichtlich aller Textildruckmaschinen an die Datenzentrale zu übermitteln. Somit kann auch ein gemeinsames Modul für alle Textildruckmaschinen oder zumindest für einen Teil der Textildruckmaschinen eines Unternehmens vorgesehen sein.

Der Druckauftrag von einem Dritten kann erfindungsgemäß sowohl an das Modul als auch an die Steuermittel der Textildruckmaschine übermittelt werden. Dies kann insbesondere davon abhängen, ob das Modul oder die Steuermittel die Druckaufträge der Textildruckmaschine verwalten. Auch kann das Modul ausgebildet sein, Druckaufträge von der Datenzentrale entgegenzunehmen und an die Steuermittel zu übersenden, welche wiederum ausgebildet ist, sowohl lokale Druckaufträge als auch Druckaufträge von Dritten zu verwalten und beispielsweise in Form einer Druckauftragsliste mit definierter Reihenfolge der Durchführung der Druckaufträge zu verarbeiten.

Insbesondere hinsichtlich einer Druckauftragsliste der mindestens einen Textildruckmaschine des jeweiligen Unternehmens kann es vorteilhaft sein, dass eine Kommunikation des jeweiligen Moduls mit der Datenzentrale bedarfsgerecht unterbrechbar ist, wobei eine lokale Leerzeit der Textildruckmaschine lediglich für lokale Druckaufträge verwendbar ist. Das Modul kann insbesondere dazu ausgebildet sein, eine Information an die Datenzentrale zu übermitteln, dass zumindest die Textildruckmaschine oder -maschinen des Unternehmens, welchen in das Modul zugeordnet sind, zumindest temporär nicht für Druckaufträge eines Dritten zur Verfügung steht. Es kann also bedarfsgerecht zwischen einer kombinierten Auslastung der Textildruckmaschine(n) aus lokalen Druckaufträgen von Kunden des jeweiligen Unternehmens und Druckaufträgen von Dritten über die Datenzentrale sowie einer rein lokalen Verwendung der Textildruckmaschinen mit lediglich lokalen Druckaufträgen gewechselt werden. Auch kann das Modul ausgebildet sein, einzelne Textildruckmaschinen für eine Vergabe von lediglich lokalen Druckaufträgen freizugeben, wobei mindestens eine der Textildruckmaschinen des jeweiligen Unternehmens für eine Annahme von Druckaufträgen von Dritten freigegeben verbleibt.

Die Erfindung wird nachfolgend anhand eines bevorzugten Ausführungsbeispiels, welches in der beiliegenden, schematischen Zeichnung dargestellt ist, weiter beschrieben. In der Zeichnung zeigt:

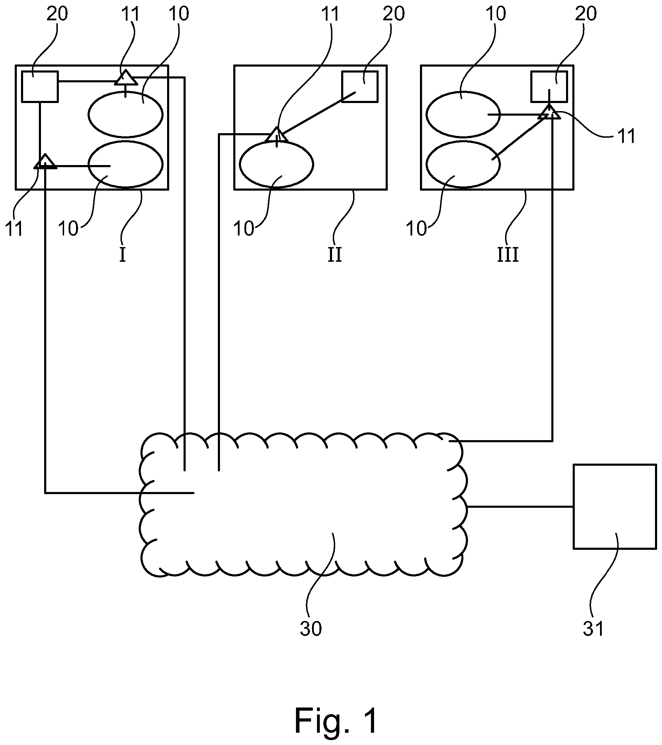

- Fig.1:: eine schematische Darstellung einer Ausführungsform des Erfindungsgemäßen Systems.

Figur 1 zeigt ein Ausführungsbeispiel des erfindungsgemäßen Systems zum Betreiben von Textildruckmaschinen 10. Dargestellt sind drei voneinander unabhängige Unternehmen I, II und III, welche jeweils mindestens eine Textildruckmaschine 10, ein Modul 11 und ein Steuermittel 20 aufweisen. Diese drei Bestandteile können in unterschiedlicher Weise zueinander ausgebildet sein. Nach Figur 1 sind beispielhaft drei Varianten für das Zusammenspiel der Textildruckmaschinen 10, der Module 11 unter Steuermittel 20 dargestellt. Im Unternehmen I kann jeder Textildruckmaschine 10 ein Modul 11 zugeordnet sein, welches jeweils mit dem Steuermittel 20 verbunden sein kann. Hierbei kann das Modul 11 als eigenständige Einrichtung, welche sowohl mit der Textildruckmaschine 10 als auch mit dem Steuermittel 20 verbunden ist, ausgebildet sein. Dieser Aufbau kann sowohl mit lediglich einer Textildruckmaschine 10, mit 3, 4, 5 oder mehr Textildruckmaschinen 10 ausgebildet sein. Das Zusammenspiel der drei Komponenten, gemäß dem beispielhaft dargestellten Unternehmen I, ist insbesondere unabhängig von der Zahl der vorgesehenen Textildruckmaschinen 10, wobei die Anzahl der Module 11 der Anzahl der Textildruckmaschinen entsprechen kann. Weiterhin kann das Modul 11 mit der Datenzentrale 30 in Verbindung stehen.

In dem beispielhaft dargestellten Unternehmen II können mindestens eine Textildruckmaschine 10, ein Modul 11 und ein Steuermittel 20 vorgesehen sein. Das Modul 11 kann als integraler Bestandteil der Textildruckmaschine 10 vorgesehen sein, insbesondere als ein mit dem Textildruckmaschine 10 verbundener Chip, Steckkarte, Erweiterungseinrichtung, oder ähnlichem und/oder eine der Betriebssoftware der Textildruckmaschine 10 zugefügte Programmapplikation, welche ausgebildet ist, bereits vorhandene Kommunikationsmittel der Textildruckmaschine 10 zu verwenden, um Daten hinsichtlich des Zustands, der Einrichtung und/oder oder der Auslastung der Textildruckmaschine 10 an eine Datenzentrale 30 zu übermitteln. Demnach kann, insbesondere gemäß dem Unternehmen II, das Modul 11 und/oder der Textildruckmaschine 10 Mittel zum Übersenden von Daten an die Datenzentrale 30 aufweisen. Auch bei diesem Aufbau (Unternehmen II) können beliebig viele Drucker dem Unternehmen zugeordnet sein, wobei jeweils ein Modul 11 Teil einer der Textildruckmaschinen 10 sein kann oder zumindest mit diesen assoziiert sein kann.

Nach dem beispielhaft dargestellten Unternehmen III können 1, 2, 3, 4, 5 oder mehr Textildruckmaschinen 10 vorgesehen sein. Diese können mit einem gemeinsamen Modul 11 verbunden sein. Das Modul 11 kann hierbei ausgebildet sein, Daten hinsichtlich des Zustands, der Einrichtung und/oder der Auslastung aller der Textildruckmaschinen 10 zu ermitteln und diese Daten an die Datenzentrale 30 zu übersenden. Insbesondere kann das Modul 11 mit dem Steuermittel 20 verbunden sein oder als Teil des beliebigen ausgebildet sein. Grundsätzlich können die Steuermittel 20 beispielsweise durch zumindest einen Server gebildet sein. Der unmittelbare Benutzer der Textildruckmaschinen 10 des jeweiligen Unternehmens kann über die Steuermittel 20 lokal den Textildruckmaschinen 10 Druckaufträge zustellen. Dies kann sowohl, wie nach Fig. 1 dargestellt, über das jeweilige Modul 11 oder direkt durch eine nicht dargestellte direkte Verbindung des jeweiligen Steuermittels 20 mit den einzelnen Textildruckmaschinen 10 des jeweiligen Unternehmens ermöglicht sein. Ebenfalls kann das Steuermittel 20 ausgebildet sein, direkt mit der Datenzentrale 30 zu kommunizieren, also Daten hinsichtlich der Textildruckmaschine 10 zu übermitteln und globale Druckaufträge von der Datenzentrale 30 zu empfangen. Das jeweilige Modul 11 kann hierbei dazu bestimmt sein, die Daten hinsichtlich des Zustands, der Einrichtung und/oder der Auslastung sowie grundsätzlich auch weiterer für die Vergabe von globalen Druckaufträgen entscheidender Parameter des jeweiligen Textildruckmaschine 10 oder der mehreren Textildruckmaschinen 10 dem Steuermittel 20 zur Verfügung zu stellen.

Diese Variante, bei welcher das Steuermittel 20 ausgebildet ist, von der Datenzentrale 30 Druckaufträge entgegenzunehmen, kann unabhängig davon vorgesehen sein, ob grundsätzlich ein Aufbau gemäß dem Unternehmen I, II, II oder ein anderer Aufbau in dem Unternehmen mit mindestens einem Textildruckmaschine 10 und einem Modul 11 vorgesehen ist.

Wie in Fig. 1 dargestellt, können die jeweiligen Module 11 in den einzelnen Unternehmen I, II und III mit der Datenzentrale 30 verbunden sein, wobei die Module 11 an die Datenzentrale 30 Informationen und/oder Daten zum Zustand, der Einrichtung und/oder der Auslastung der jeweiligen Textildruckmaschine 10 übermitteln. Die Datenzentrale 30 kann mindestens einen Computer 31 aufweisen, welcher mit der Datenzentrale 30 verbunden ist. Die Datenzentrale 30 kann insbesondere ein globaler Server sein, welcher über eine beliebige Ferndatenleitung, das Internet, über eine VPN Verbindung (Virtual Private Network) oder in sonstiger Weise für eine Datenkommunikation/Datenaustausch erreichbar ist. Der Computer 31 kann über eine beliebige Datenverbindung, wie voranstehend beschrieben, mit der Datenzentrale 30 in Verbindung stehen.

Der Computer 31 kann als Eingabeterminal an dem/den Server(n), welcher die Datenzentrale 30 darstellt, vorgesehen sein. Über eine Eingabemaske, welche beispielsweise in einem Browserfenster über eine geeignete Software oder ein anderes Mittel darstellbar ist, können Informationen für einen globalen Druckauftrag von einem Dritten an die Datenzentrale 30 übermittelt werden. Über die Eingabemaske kann ein Druckauftrag von einem Dritten an die Datenzentrale 30 übermittelt werden.

Der Druckauftrag kann insbesondere Informationen hinsichtlich des Layouts, des Designs, der farblichen Ausgestaltung sowie weiter für einen Textildruck relevanter Informationen aufweisen, und Informationen hinsichtlich der nötigen Druckzeit, zum Umsetzen des Druckauftrags enthalten.

Die Datenzentrale 30 kann ausgebildet sein, den von einem Dritten an die Datenzentrale 30 übermittelten Druckauftrag mit den Daten zu vergleichen, welche die Module 11 der jeweiligen Unternehmen über die Textildruckmaschinen 10 an die Datenzentrale 30 übermittelt haben. Die Datenzentrale 30 kann hierbei ausgebildet sein, Leerlaufzeiten der jeweiligen Textildruckmaschine 10 in den einzelnen Unternehmen zu erfassen und/oder zu bestimmen und diese mit der voraussichtlich benötigten Druckzeit für einen Druckauftrag von einem Dritten zu vergleichen.

Weiteren kann die Datenzentrale 30 ausgebildet sein, die durch den Druckauftrag eines Dritten gestellten Anforderungen mit den im erfindungsgemäßen System vorhandenen Textildruckmaschinen 10 zu vergleichen. Kann eine entsprechend ausgestattete Textildruckmaschine 10 im erfindungsgemäßen System festgestellt werden, welcher sowohl die für den Druckauftrag benötigten Verbrauchsmaterialien (beispielsweise Textilien, Druckerfarbe und/oder Vorbehandlungsmaterialien), die benötigte Einrichtung (beispielsweise Inkjet-Druck, Siebdruck und/oder Vorbehandlungseinrichtungen) als auch entsprechend ungenutzte Druckzeit, also eine entsprechend lange Leerlaufzeit, aufweist, kann die Datenzentrale 30 den Druckauftrag dem entsprechenden Textildruckmaschine 10 zur Bearbeitung übermitteln.

Grundsätzlich kann das erfindungsgemäße System eine beliebige Anzahl von unabhängig voneinander operierenden Unternehmen aufweisen, welche jeweils für sich genommen mit einem Aufbau gemäß des beispielhaft dargestellten Unternehmens I, II, II oder in sonstiger Weise strukturiert sein können. Die Einrichtungsstruktur des einen Unternehmens, also das jeweilige Zusammenspiel von Textildruckmaschinen 10, Modulen 11 und Steuermittel 20, kann dabei unabhängig von der Einrichtungsstruktur eines weiteren Unternehmens sein. Es können grundsätzlich alle Unternehmen des erfindungsgemäßen Systems dieselbe Einrichtungsstruktur aufweisen oder auch jeweils unterschiedlich aufgebaut sein.

## Patentansprüche

1. System zum Betreiben von Textildruckmaschinen (10), mit
- einer ersten Textildruckmaschine (10) und mindestens einer zweiten Textildruckmaschine (10), welche in einem ersten Unternehmen bzw. einem zweiten Unternehmen vorgesehen sind, welche unabhängig voneinander sind,
- wobei jede Textildruckmaschine (10) vom Maschinenhersteller mit einem Datenverarbeitungsmodul (11) versehen ist, welches ausgebildet ist, Daten zum Zustand, Einrichtung und/oder Auslastung der Textildruckmaschine (10) zu erfassen sowie Textil und Druckfarbe an der Textildruckmaschine (10) zu ermitteln,
- wobei das Datenverarbeitungsmodul (11) auf Wunsch des Käufers der Textildruckmaschine (10) freischaltbar ist,
- wobei die Textildruckmaschinen (10) unabhängig von Unternehmen und Standort die erfassten Daten und dazu ermittelten Daten von Textil und Druckfarbe von einem freigeschalteten Datenverarbeitungsmodul (11) mittels Online-Verbindung (30) an eine Datenzentrale des Maschinenherstellers übermittelt,
- wobei die Datenzentrale (30) ausgebildet ist, von Dritten Druckaufträge entgegenzunehmen und basierend auf den übermittelten Daten mindestens einen zu den Daten passenden Druckauftrag an eine der mindestens zwei Textildruckmaschinen (10) zu übermitteln, soweit genügend freie Druckzeit auf der jeweiligen Textildruckmaschine (10) zur Verfügung steht,
- wobei zumindest für die erste Textildruckmaschine (10) und die mindestens zweite Textildruckmaschine (10) jeweils ein Steuermittel (20), insbesondere Server, vorgesehen sind, welches ausgebildet ist, jeweils einer der mindestens zwei Textildruckmaschinen (10) lokale Druckaufträge bereitzustellen, und
- wobei die Kommunikation des jeweiligen Datenverarbeitungsmoduls (11) mit der Datenzentrale (30) bedarfsgerecht unterbrochen wird, um die lokale Leerzeit der Textildruckmaschine (10) für lokale Druckaufträge zu verwenden.

2. System zum Betreiben von Textildruckmaschinen (10) nach Anspruch 1, wobei die Datenzentrale (30) ausgebildet ist, die jeweilige Auslastung der mindestens zwei Textildruckmaschinen (10) mit einer voraussichtlichen Druckdauer von Druckaufträgen der Datenzentrale (30) abzugleichen.

3. System zum Betreiben von Textildruckmaschinen (10) nach Anspruch 1, wobei die mindestens zwei Steuermittel (20) jeweils als Teil eines separaten lokalen digitalen Netzwerks bereitgestellt sind,

4. System zum Betreiben von Textildruckmaschinen (10) nach einem der Ansprüche 1 bis 3, wobei die Datenzentrale (30) eine Eingabemaske aufweist, die, insbesondere über das Internet, erreichbar ist und ausgebildet ist, Druckaufträge von den Dritten an die Datenzentrale (30) bereitzustellen.

5. System zum Betreiben von Textildruckmaschinen nach Anspruch 4, wobei die Eingabemaske innerhalb eines Browserfensters darstellbar ist und ein Druckauftrag von einem Dritten für die Datenzentrale (30) von einem beliebigen Computer (31) mit Internetanbindung aus in die Eingabemaske eingebbar ist.

6. System zum Bearbeiten von Textildruckmaschinen nach einem der Ansprüche 1 bis 5, wobei nachträglich bereitgestellte lokale Druckaufträge in den jeweiligen Unternehmen mit einer Priorität gegenüber früheren Druckaufträgen der Datenzentrale (30) durch die Textildruckmaschinen (10) bearbeitbar sind.

7. System zum Betreiben von Textildruckmaschinen nach einem der Ansprüche 1 bis 6, wobei die Steuermittel (20) der Textildruckmaschinen (10) ausgebildet sind, einen entgegengenommenen Druckauftrag von der Datenzentrale (30), zu pausieren und/oder zu stornieren und weiter ausgebildet sind, den Textildruckmaschinen (10) statt dem Druckauftrag der Datenzentrale (30) einen lokalen Druckauftrag zuzuordnen.

8. System zum Betreiben von Textildruckmaschinen nach einem der Ansprüche 3 bis 7, wobei die Steuermittel (20) des jeweiligen Netzwerks ausgebildet sind, der Textildruckmaschine (10) des jeweiligen Netzwerks einen globalen Druckauftrag der globalen Plattform zuzuordnen, welcher durch die Textildruckmaschine (10) bearbeitbar ist.

## Claims

1. System for operating textile printing machines (10), with
- a first textile printing machine (10) and at least one second textile printing machine (10), which are provided in a first entity or a second entity, which are independent of each other,
- wherein each textile printing machine (10) is provided from the machine producer with a data-processing module (11), which is configured to detect data about the state, set-up and/or utilization of the textile printing machine, and to determine textile and printer ink on the textile printing machine (10),
- wherein the data processing module (11) can be unblocked on the request of a customer of the textile printing machine (10),
- wherein the textile printing machines (10) transmit the detected data and besides the determined data of textile and printer ink from an unblocked data processing module (11) to a data center (30) of the machine producer independently of entities and location by means of online-connection,
- wherein the data center (30) is configured to accept print jobs from third parties and, based on the transmitted data, to transmit at least one print job fitting the data to one of the at least two textile printing machines (10), so far as sufficient free print time is available on the respective textile printing machine (10).
- at least for the first textile printing machine(10) and the at least second textile printing machine (10), respectively, a control means (20), in particular a server are provided, which means is configured to make local print jobs available to one of the at least two textile printing machines (10).
- wherein the communication of the respective data-processing module (11) with the data center (30) is broken based on the needs in order to use the local idle time of the textile printing machine (10).

2. System for operating textile printing machines (10) according to claim 1,
wherein the data center (30) is configured to compare the respective utilization of the at least two textile printing machines (10) with an expected print duration of print jobs of the data center (30).

3. System for operating textile printing machines (10) according to claim 1,
wherein the at least two control means (20) are respectively made available as part of a separate local digital network.

4. System for operating textile printing machines (10) according to claim 1 or 3,
wherein the data center (30) comprises an input mask which can be reached, in particular via the internet, and is configured to make print jobs from the third parties available to the data center (30).

5. System for operating textile printing machines according to claim 4,
wherein the input mask can be represented within a browser window, and a print job from a third party for the data center (30), can be input into the input mask from any computer (31) with an internet connection.

6. System for processing textile printing machines according to any one of claims 1 to 5,
wherein local print jobs, made subsequently available, can be processed in the respective entities, by the textile printing machines (10), with a priority relative to earlier print jobs of the data center (30).

7. System for operating textile printing machines according to claims 1 to 6,
wherein the control means (20) of the textile printing machines (10) are configured to pause and/or to cancel a print job accepted from the data center (30) and are further configured to assign a local print job to the textile printing machines (10) instead of the print job of the data center (30).

8. System for operating textile printing machines according to any one of claims 3 to 7,
wherein the control means (20) of the respective network are configured to assign a global print job of the global platform to the textile printing machine (10) of the respective network, which job can be processed by the textile printing machine (10).

## Revendications

1. Système de fonctionnement de machines d'impression sur textile (10), comportant
- une première machine d'impression sur textile (10) et au moins une deuxième machine d'impression sur textile (10), lesquelles sont prévues dans une première entreprise respectivement une deuxième entreprise, lesquelles sont indépendantes l'une de l'autre,
- dans lequel chaque machine d'impression sur textile (10) est dotée par le fabricant de machines d'un module de traitement de données (11), lequel est réalisé pour détecter des données sur l'état, l'équipement et/ou le taux d'utilisation de la machine d'impression sur textile (10) ainsi que pour déterminer le textile et l'encre sur la machine d'impression sur textile (10),
- dans lequel le module de traitement de données (11) peut être mis en fonctionnement à la demande de l'acheteur de la machine d'impression sur textile (10),
- dans lequel les machines d'impression sur textile (10) transmettent indépendamment de l'entreprise et du site les données saisies et les données de textile et d'encre collectées en outre par un module de traitement de données (11) mis en fonctionnement au moyen d'une connexion en ligne (30) à une centrale de données du fabricant de machines,
- dans lequel la centrale de données (30) est réalisée pour recevoir des tâches d'impression de tiers et pour transmettre sur la base des données collectées au moins une tâche d'impression adaptée aux données à une des au moins deux machines d'impression sur textile (10) dans la mesure où il y a assez de temps d'impression libre sur la machine d'impression sur textile (10) concernée à disposition,
- dans lequel au moins pour la première machine d'impression sur textile (10) et l'au moins deuxième machine d'impression sur textile (10), un moyen de commande (20), en particulier un serveur, est à chaque fois prévu, lequel est réalisé pour mettre à disposition à chaque fois des tâches d'impression locales à une des au moins deux machines d'impression sur textile (10), et
- dans lequel la communication du module de traitement de données (11) concerné avec la centrale de données (30) est interrompue selon les besoins pour utiliser le temps vide local de la machine d'impression sur textile (10) pour des tâches d'impression locales.

2. Système de fonctionnement de machines d'impression sur textile (10) selon la revendication 1,
dans lequel la centrale de données (30) est réalisée pour comparer le taux d'utilisation respectif des au moins deux machines d'impression sur textile (10) avec une durée d'impression probable de tâches d'impression de la centrale de données (30).

3. Système de fonctionnement de machines d'impression sur textile (10) selon la revendication 1,
dans lequel les au moins deux moyens de commande (20) sont mis à disposition à chaque fois en tant que partie d'un réseau numérique local séparé.

4. Système de fonctionnement de machines d'impression sur textile (10) selon l'une des revendications 1 à 3,
dans lequel la centrale de données (30) présente un masque de saisie, qui peut être atteint, en particulier via Internet, et réalisé pour mettre à disposition des commandes d'impression de tiers à la centrale de données (30).

5. Système de fonctionnement de machines d'impression sur textile selon la revendication 4,
dans lequel le masque de saisie peut être représenté à l'intérieur d'une fenêtre de navigateur et une tâche d'impression peut être saisie par un tiers pour la centrale de données (30) depuis un ordinateur (31) quelconque avec connexion Internet dans le masque de saisie.

6. Système de fonctionnement de machines d'impression sur textile selon l'une des revendications 1 à 5,
dans lequel des tâches d'impression locales mises à disposition ultérieurement dans l'entreprise concernée avec une priorité par rapport à des tâches d'impression précédentes de la centrale de données (30) peuvent être traitées par les machines d'impression sur textile (10).

7. Système de fonctionnement de machines d'impression sur textile selon l'une des revendications 1 à 6,
dans lequel les moyens de commande (20) des machines d'impression sur textile (10) sont réalisés pour mettre en pause et/ou pour annuler une tâche d'impression reçue par la centrale de données (30) et sont en outre réalisés pour associer aux machines d'impression sur textile (10) une tâche d'impression locale à la place de la tâche d'impression de la centrale de données (30).

8. Système de fonctionnement de machines d'impression sur textile selon l'une des revendications 3 à 7,
dans lequel les moyens de commande (20) du réseau concerné sont réalisés pour associer à la machine d'impression sur textile (10) du réseau concerné une tâche d'impression globale de la plateforme globale, laquelle peut être traitée par la machine d'impression sur textile (10).
